Europäisches Patentamt

European Patent Office

Office européen des brevets

(19)

(11) Publication number: **0 170 629**
**A2**

(12) # EUROPEAN PATENT APPLICATION

(21) Application number: 85830100.5

(22) Date of filing: 26.04.85

(51) Int. Cl.⁴: **B 26 F 3/06**
D 06 H 7/00, D 06 C 23/00
A 47 H 23/00

---

(30) Priority: **01.08.84 IT 2217084**

(43) Date of publication of application:
**05.02.86 Bulletin 86/6**

(84) Designated Contracting States:
**AT BE CH DE FR GB LI NL SE**

(71) Applicant: **SILENT GLISS CASA S.r.l.**
**Via Pacinotti, 6**
**I-20090 Segrate (Milano)(IT)**

(72) Inventor: **Minder, Carlo F.**
**Via Pacinotti, 6**
**I-20090 Segrate (Milano)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

---

(54) **Process for cutting and finishing curtains for baths or showers, and curtains obtained by the process.**

(57) A process for the production of curtains for baths or showers, from flat textile fabrics of synthetic or mixed fibres, in which the textile fabric is cut into pieces, (1) of the desired width and length by cutting means which are provided with or associated with heater means by which the cut edges of the fabric are heated and softened to fuse together the fibres o the fabric, thus avoiding the necessity for the formation of selvages or hems which would otherwise be necessary to prevent unravelling of the fabric (1) during subsequent use, particularly during washing, spin drying and ironing.

Additionally the cutter means may be associated with a series of heated punches, discs or rollers, or equivalent instruments or apparatus such as ultra-sonic equipment or laser beam apparatus, adjacent the cutter means, to provide for heat welding of the threads of the fabric in rows in other regions of the cut fabric piece, in such a way as to stabilize the structure of this latter at these other regions.

EP 0 170 629 A2

./...

Fig. 1

- 1 -

"Process for cutting and finishing curtains for baths or showers, and curtains obtained by the process"

The present invention relates to a process for cutting and finishing curtains for baths or showers, starting from a woven or non-woven textile fabric of synthetic or mixed fibres, and to curtains obtained by means of such process.

Currently, most curtains for baths and showers are formed of plastics material which, in use, are suspended from suitable sliding supports. Shower curtains may also be constituted by a plastic-coated fabric or by a fabric which has been made impermeable or, at least rendered water repellent, stitched along its edges and again suspended from suitable sliding supports. Plastics curtains, however, have a rather bare aspect, and are unpleasant to the sight and touch, and plastics-coated fabrics are not much better. These latter, moreover require additional costs for their production which involves the use of suitable machinery and extra labour. Also, fabrics thus treated must necessarily be provided with a sewn selvage to prevent the curtain fabric from unravelling, and both upper and lower hems are also required.

In the specific use of shower curtains, however, the selvage, upon getting saturated, often becomes curled, giving the curtain a rather unpleasant appearance, whilst the lower hem is susceptible of retaining water and soap with the consequent possible formation of moulds and invasion of bacteria. Obviously, these practical disadvantages are also present in the case of fabric curtains which have been made impermeable or water repellent.

The present invention seeks therefore to provide a process for cutting and finishing curtains for baths or showers, which will allow a sheet of fabric to be cut into pieces for the curtains and, at the same time or subsequently, interconnection of the threads of the fabric along the cut edges of the fabric pieces and in zones can be effected.

According to the present invention, therefore, there is provided a process for cutting and finishing curtains for baths or showers, characterised by the fact that it comprises the steps of cutting a sheet of fabric or textile structure, made of synthetic or mixed fibres, into pieces to form curtains by means of cutting tools or cutting instruments, the cut pieces being simultaneously or subsequently subjected to a heat stabilization treatment by means of a laser beam, ultrasonic apparatus, or other heat welding devices such as to effect heat welding of the fibres of the fabric in strips at least along the cut edges so as to secure together the weft and warp threads disposed along the said strips adjacent to such cut edges.

One advantage of the process of the present invention lies in the fact that it allows the cost of the finished product to be drastically reduced. Another advantage of the process of the invention is that it produces shower or bath curtains which are cut and finished in such a way that they can perfectly well be washed, spin dried and/or ironed by the housewife at home and without any difficulty.

A further advantage of the process of the present invention is that it enables curtains for baths or showers to be produced which are pleasing to the touch and which may incorporate a wide range of colours and/or designs without being subject to the constraints previously imposed by the use of plastics or plastic-coated materials. Shower or bath curtains made using the process of the present invention are thus easy to coordinate with the remaining furnishings of the bathroom.

The cutting and simultaneous heat welding of the fibres may also be effected by means of the use of a laser beam or by ultrasonic apparatus.

Moreover, with the process of the present invention it is possible to modify the structure of the fabric at its edges and in zones or strips contiguous

- 4 -

thereto, in such a way as to obtain the structural purpose of binding the threads against unravelling, without substantially affecting the appearance of the fabric; that is the heat sealing may be practically invisible. Alternatively, however, the heat sealing may be deliberately intended to produce visible marks on the fabric. Such marks may be constituted by parallel or inclined ribs running along the length of the curtain or across its width or may be constituted by indented furrows or other surface features.

The starting fabric obviously, may have any type of weave, and/or reinforcement and/or colour and/or design. More generally, the fabric may be constituted by a flat textile structure (i.e. woven or non-woven) made with threads susceptible of being subjected to a softening and structural modification by heat.

Shower curtains thus obtained, moreover, since they are not formed of plastics-coated fabrics, allow a better passage of air and do not deform whilst being subjected to strong humidity and sudden changes of temperature, such as occur during use of a shower.

Various embodiments of the present invention will now be more particularly described, by way of example, with reference to the accompanying drawings, in which:

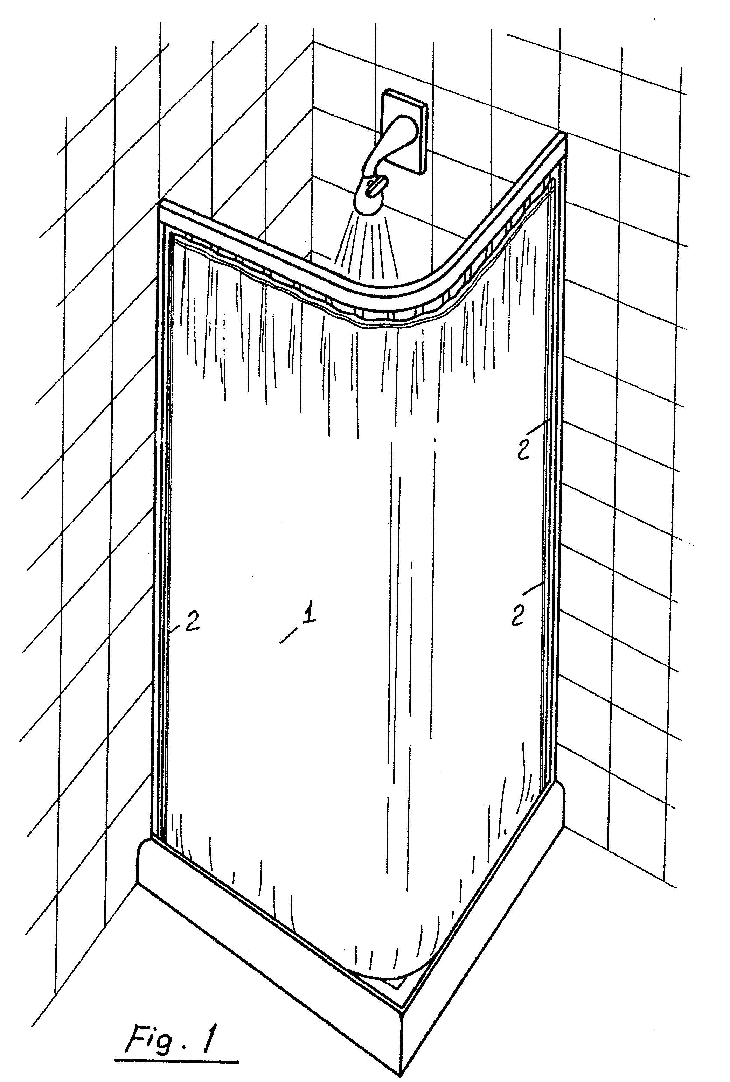

Figure 1 is a schematic view showing a shower provided with curtains obtained by the process of the present invention;

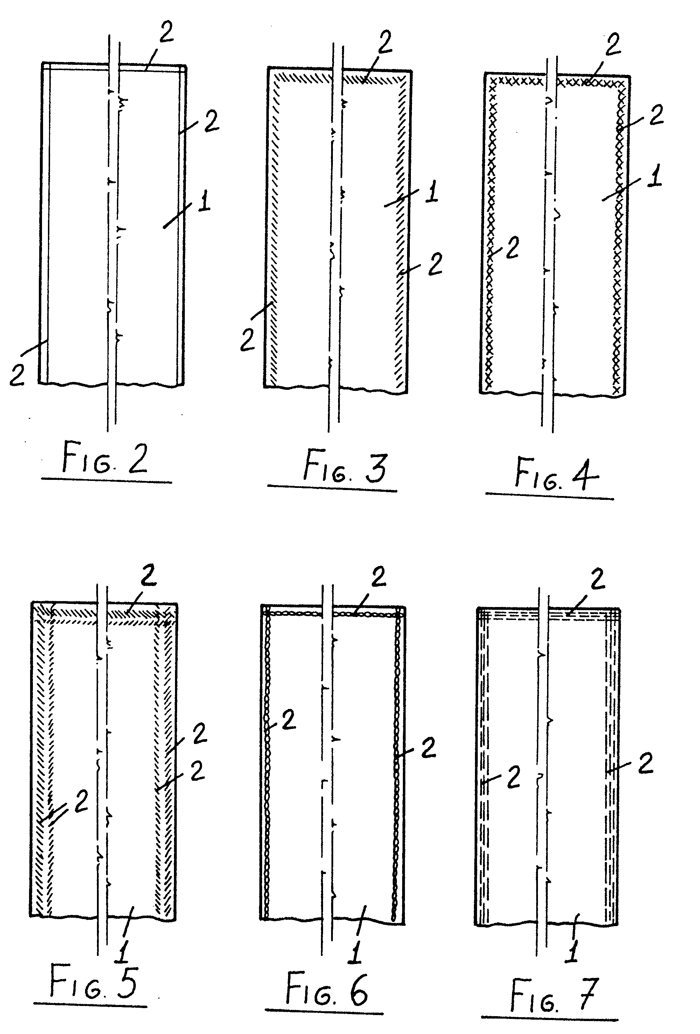

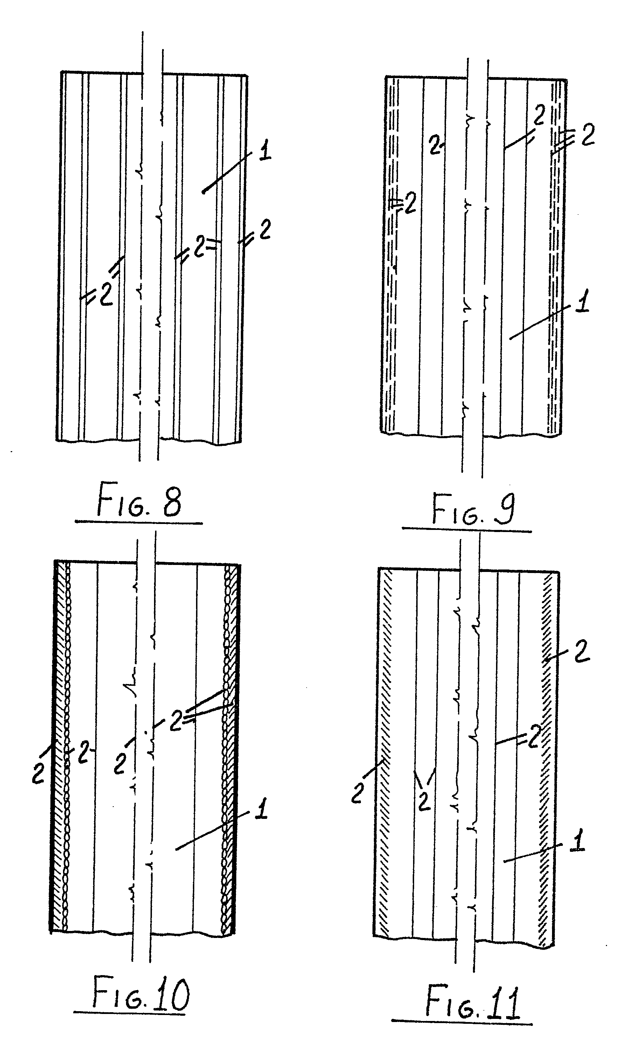

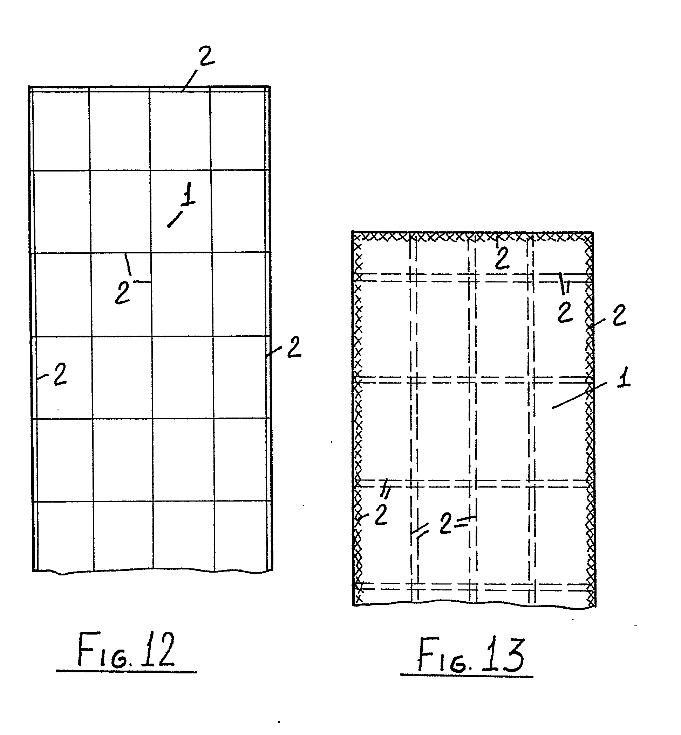

Figures 2 to 13 are schematic views of curtains for baths or showers, formed by means of the process of the present invention, and provided with various heat stabilization patterns.

Referring now to the drawings, the process of the invention for cutting and finishing curtains for baths or showers, provides for the use of fabrics, or, more generally, flat textile structures, made with threads of synthetic or mixed fibres, which are cut into curtain-size pieces 1 of desired width and length, by means of suitable tools or cutting apparatus or instruments.

In practice, the cutting is accompanied by a softening of the fibres along the cut edges, with a consequent heat welding of the cut threads: this is effected either simultaneously with the cutting of the edges themselves or subsequently.

For the purpose of reinforcing the stability of the cut edges moreover, the process of the present invention provides for the structural modification of the threads in the marginal zones of the fabric adjacent to the edges. Naturally, this treatment can be extended also to wider portions of the fabric and, even, to the entire surface area thereof, whereby to obtain curtains in stabilized but not plastics-coated fabrics. Such cutting and heat welding operations and/or heat stabilization of the edges of the lateral portions., or of the entire surface of the curtains, in particular, is obtained, preferably, as has been already explained, by means of a laser beam or by ultrasonic apparatus or, even, by means of suitable conveniently heated instruments or equipment associated with the cutters or separate from them.

The heat welding means, whatever their form, are able to produce, close to the edges of the curtains, in zones contiguous thereto, or over the whole of their surface area, corresponding heat stabilization patterns 2 able to guarantee a perfect stability of the edges of the fabrics even in the event of prolonged washing operations, spin drying and ironing of the curtains themselves.

Such heat-formed stabilization patterns, naturally, can have any suitable geometric conformation and can be more or less visible as desired. These heat-formed stabilization patterns serve to fix the threads against unravelling without substantially changing the overall aspect of the fabric or its characteristic form, thus allowing curtains to be obtained which are highly pleasing to the sight and touch.

Claims:

1. A process for cutting and finishing curtains (1) for baths or showers, characterised by the fact that it comprises the steps of cutting a sheet of fabric or textile structure, made of synthetic or mixed fibres, into pieces to form curtains by means of cutting tools or cutting instruments, the cut pieces (1) being simultaneously or subsequently subjected to a heat stabilization treatment by means of a laser beam, ultrasonic apparatus, or other heat welding devices such as to effect heat welding of the fibres of the fabric in strips (2) at least along the cut edges so as to secure together the weft and warp threads disposed along the said strips (2) adjacent to such cut edges.

2. A process according to Claim 1, characterised by the fact that the said fabrics are also subjected to heat welding in regions spaced from the edges thereof to effect stabilization thereof.

3. A process according to Claim 1 or Claim 2, characterised by the fact that the said heat stabilization treatment creates structural patterns (2) on the fabric, in the form of parallel or inclined twilling or other pattern.

4. A process according to any preceding Claim, characterised by the fact that the starting

- 8 -

fabric is a reinforced flat textile fabric made with threads of synthetic or mixed fibres which are softenable by heat applied by the utilisation of a laser beam or ultrasonic radiation or other suitable heat welding means.

5. A shower or bath curtain produced by the process of any preceding Claim, characterised by the fact that the curtain has, in proximity with its edges, defined by a continuous line of welding, one or more continuous, broken or composite lines or a heat-formed pattern having any desired shape.

6. A shower or bath curtain according to Claim 5, characterised by the fact that it has a continuous or broken heat-formed pattern over substantially the whole of the surface thereof.

1/4

0170629

Fig. 1

FIG. 2

FIG. 3

FIG. 4

FIG. 5

FIG. 6

FIG. 7

FIG. 8

FIG. 9

FIG. 10

FIG. 11

FIG. 12

FIG. 13